# EUROPÄISCHE PATENTSCHRIFT

(11) **EP 1 267 471 B1**
(45) Veröffentlichungstag und Bekanntmachung des Hinweises auf die Patenterteilung: **13.12.2006**
(21) Anmeldenummer: 02012369.1
(22) Anmeldetag: 06.06.2002
(51) Int. Cl.: H02K 1/20, H02K 16/04

(54) **Statorbaueinheit einer Synchronmaschine mit transversaler Flussführung**
Stator module for a transversal flux synchronous machine
Module de stator pour une machine synchrone à flux transversal

(30) Priorität: 15.06.2001 DE 10128646
(43) Veröffentlichungstag der Anmeldung: 18.12.2002
(73) Patentinhaber: Voith Turbo GmbH & Co. KG, 89522 Heidenheim (DE)
(72) Erfinder: Angerer, Wolfram, 89518 Heidenheim (DE); Lange, Andreas, Dr., 89551 Zang (DE); Mühlberger, Uwe, 89522 Heidenheim (DE)
(74) Vertreter: Dr. Weitzel & Partner

## Beschreibung

Die Erfindung betrifft eine Statorbaueinheit, im einzelnen mit den Merkmalen aus dem Oberbegriff des Anspruches 1; ferner eine Synchronmaschine mit transversaler Flußführung und ein Antriebssystem mit einer Synchronmaschine mit transversaler Flußführung.

Statorbaueinheiten für elektrische Maschinen, insbesondere Synchronmaschinen mit transversaler Flußführung sind in einer Vielzahl von Ausführungen bekannt. Stellvertretend wird dabei auf die nachfolgenden Druckschriften verwiesen:
1. DE 198 33 021 A1 und
2. EP 1 005 136 A1 und 3. DE 92 00 502 U1

Bei der in der Druckschrift DE 198 33 021 A1 beschriebenen Ausführung umfaßt die Statorbaueinheit für eine Synchronmaschine mit transversaler Flußführung, insbesondere eine Transversalflußmaschine mit mindestens einer Phase, eine, einer Phase zugeordnete und einer Ankerwicklung tragende Außen - und Innenstatoreinheit, welche in Einbaulage einem Rotor unter Bildung eines, bezogen auf die Rotationsachse des Rotors der Synchronmaschine in radialer Richtung angeordneten Luftspaltes zugeordnet ist. Die Statoreinheit umfaßt ein ringförmiges Jochelement aus einem metallischen Pulververbundwerkstoff und eine Vielzahl von Zähnen, welche in zwei Reihen in Umfangsrichtung hintereinander angeordnet sind. Das ringförmige Jochelement aus einem metallischen Pulververbundwerkstoff übernimmt die Funktion des Rückschlußelementes. Die Statoreinheit beschreibt dabei eine in einer Ansicht im Axialschnitt der elektrischen Maschine bei Projizierung in eine durch die Rotationasachse R des Rotors und einer Senkrechten S zu dieser beschreibbaren Ebene im wesentlichen U-förmig ausgebildete Querschnittsfläche. Die beiden Schenkel der Statoreinheit werden dabei von den Zähnen gebildet. Zwischen den Schenkeln befindet sich von drei Seiten umschlossen die in Umfangsrichtung verlaufende Ankerwicklung. Dabei stehen in Funktionslage die Schenkel den Permanentmagneten einer Polstruktur eines Rotors der Synchronmaschine mit transversaler Flußführung gegenüber. Die Zahnreihen sind dabei kraft- und/oder formschlüssig mit dem Jochelement verbunden. Vorzugsweise werden eine Mehrzahl von Zähnen zu sogenannten Zahnringsegmenten oder Zahnringen zusammengefaßt, wobei diese jeweils als axialgeschichtete Blechpakete ausgeführt sind. Dazu umfaßt jede der Zahnreihen einer Statoreinheit eine Mehrzahl von in axialer Richtung hintereinander angeordneten gestanzten ringförmigen Elementen aus Blechplatten. Die Zähne werden durch Ausführung beziehungsweise Ausbildung randoffener Schlitze in Blechringscheiben realisiert. Je nach Ausführung als Innen- oder Außenstator erstrecken sich dabei die randoffenen Schlitze vom Bereich des Außenumfanges der Blechplatte beziehungsweise Blechscheibe in radialer Richtung zur zum Rotor hinweisenden Fläche des Jochelementes oder aber bei Ausführung als Außenstator vom Bereich des Innenumfanges in Richtung zur zum Rotor hinweisenden Fläche des Jochelementes. Bei Ausführung als Innenstator wird die Ankerwicklung, welche zwischen den beiden von den Zahnelementen gebildeten Schenkeln angeordnet ist, dabei direkt auf den von den Zahnelementen freien Bereich des Jochelementes aufgewickelt. Zur genauen Fixierung der Lage der Zahnelemente in axialer Richtung beim Einbau ist das ringförmige Jochelement vorzugsweise hinsichtlich seiner Erstreckung in radialer Richtung in axialer Richtung in drei Teilabschnitte untergliedert. Bei Ausführung als Innenstator weisen die zwei äußeren Teilabschnitte einen geringeren Außendurchmesser auf als der dazwischenliegende innere Teilabschnitt, welcher die Wicklung trägt.

Dem Vorteil der geringen Bauteilanzahl aufgrund der Ausgestaltung mit ringförmigen Strukturen steht jedoch der Nachteil gegenüber, daß zum einen aufgrund der erforderlichen Verdichtung der eingesetzten Pulvermaterialien für die Herstellung der Jochelemente die Größe der zu verpressenden Ringflächen durch die maximal erreichbare Preßkraft der jeweilig vorhandenen Pressen begrenzt ist und somit bei größeren Baueinheiten entsprechende Spezialvorrichtungen vorzusehen sind und desweiteren aufgrund der geringen Wärmeleitfähigkeit des Pulvermateriales des Jochelementes eine Wärmeabfuhr über die Statorbaueinheit nicht erfolgen kann.

Der Erfindung lag daher die Aufgabe zugrunde, eine Statorbaueinheit der eingangs genannten Art für eine Synchronmaschine mit transversaler Flußführung, insbesondere eine Transversalflußmaschine, derart weiterzuentwickeln, daß diese eine einfache konstruktive Ausführung aufweist, welche kostengünstig fertigbar ist und eine einfache Montage gewährleistet. Desweiteren soll die Wärmeabfuhr verbessert werden. Konstruktive Veränderungen der Statorbaueinheit beziehungsweise von einzelnen Elementen der Statorbaueinheit dürfen dabei nicht zu einer Verschlechterung der Festigkeit der Statorbaueinheit führen.

Die erfindungsgemäße Lösung ist durch die Merkmale der Ansprüche 1 und 20 charakterisiert. Vorteilhafte Ausgestaltungen sind in den Unteransprüchen beschrieben.

Die Statorbaueinheit für eine Synchronmaschine mit transversaler Flußführung umfaßt einen Außenstator und einen Innenstator. Der Außenstator umfaßt dabei jeweils eine, einer Phase zugeordnete Außenstatoreinheit und der Innenstator eine einer Phase zugeordnete eine Ankerwicklung tragende Innenstatoreinheit. Die einer Phase zugeordnete, eine Ankerwicklung tragende Innenstatoreinheit ist dem Rotor unter Bildung

eines bezogen auf die Rotationsachse des Rotors der Synchronmaschine in radialer Richtung angeordneten Luftspaltes zugeordnet. Die Innenstatoreinheit umfaßt zwei Reihen von in Umfangsrichtung hintereinander angeordneten Zähnen, welche an einem ringförmigen, aus einem metallischen Pulververbundwerkstoff gefertigten Jochelement befestigt sind. Erfindungsgemäß wird zur Lösung der oben genannten Probleme eine mehrteilige Ausführung des Jochelementes der Innenstatoreinheit einer Statorbaueinheit vorgeschlagen. Gemäß einem ersten Lösungsansatz ist das Jochelement einer Innenstatoreinheit in axialer Richtung betrachtet, das heißt in einer Richtung, welche sich durch eine Parallele zur Rotationsachse des dem Stator zugeordneten Rotors beschreiben läßt, mindestens zweiteilig ausgeführt, wobei die einzelnen Elemente des Jochelementes in axialer Richtung nebeneinander unter Bildung mindestens eines Kühlkanales angeordnet sind und entweder durch die direkte und alleinige Kopplung zwischen den einzelnen Elementen des Jochelementes in radialer und axialer Richtung gegeneinander hinsichtlich ihrer Lage fixiert und miteinander fest verbunden werden oder aber durch die Befestigung der Zahnelemente am Jochelement mit miteinander verbunden werden. Im letztgenannten Fall werden dabei die Befestigungselemente für die Zahnelemente gleichzeitig zur Lagefixierung der einzelnen Jochteile gegeneinander in radialer und axialer Richtung verwendet. Die Bildung des mindestens einen Kühlkanales erfolgt dabei im Bereich der in axialer Richtung zueinander weisenden Stirnseiten der einzelnen Jochteile eines Jochelementes, das heißt im Bereich der Berührungs- bzw. Kontaktebene zwischen zwei einander benachbart angeordneten Jochteilen eines Jochelementes. Zur Bildung des Kühlkanales ist dabei an mindestens einer, vorzugsweise an beiden zueinander weisenden Stirnseiten der Jochteile eine oder eine Mehrzahl entsprechender Ausnehmungen vorgesehen, die bei Bildung der Baueinheit des Jochelementes aus den Jochteilen den Kühlkanal oder die Kühlkanäle bilden. Der Kühlkanal ist ringförmig ausgebildet und erstreckt sich vorzugsweise in Umfangsrichtung. Denkbar sind jedoch auch Ausführungen mit einem Kühlkanal, welcher sich lediglich auf einem oder mehreren Durchmessern über einen Teil des Jochelementes in Umfangsrichtung erstreckt. Dem Kühlkanal ist dazu in beiden Fällen mindestens ein Zulauf und ein Ablauf zugeordnet. Zu diesem Zweck sind bei Bildung des Kühlkanales durch lediglich eine Ausnehmung oder Ausnehmungen an einem Jochteil durch dieses Jochteil entsprechende Verbindungsbohrungen vorgesehen, die mit entsprechenden Anschlüssen in einem Kühlmittelsystem koppelbar sind. Bei Ausbildung der Kühlkanäle durch Ausnehmungen an zwei einander benachbarten in axialer Richtung angeordneten Jochteilen können dabei die entsprechenden Versorgungskanäle durch Bohrungen in nur einem oder in beiden Jochteilen gebildet werden. Die konkrete Auswahl hängt dabei von den Anschlußmöglichkeiten und den Einsatzgegebenheiten ab.

Aus Gründen einer effektiven Fertigung werden bei Ausführungen des Jochelementes mit zwei Jochteilen vorzugsweise beide Jochteile identisch ausgeführt. In diesem Fall erstreckt sich durch eines der beiden Jochteile - erstes Jochteil oder zweites Jochteil - der mit dem Zulauf gekoppelte Verbindungskanal oder die Verbindungskanäle und durch das andere - zweites oder erstes Jochteil - mit dem Ablauf gekoppelter Verbindungskanal. Das Jochelement entsteht dann durch Drehung eines der beiden Jochteil um 180□ eine Senkrechte zur Rotationsachse des dem Stator zuordenbaren Rotors. Für diese Ausführung ist lediglich für ein Jochteil ein entsprechendes Werkzeug erforderlich. Die Variantenvielfalt einzelner Elemente des Jochelementes wird somit auf ein absolutes Minimum reduziert, da pro Durchmesser lediglich ein unterschiedliches Jochteil produziert werden muß.

Der Kühlkanal verläuft dabei vorzugsweise lediglich nur in Umfangsrichtung und ist mittig bezogen auf die Lage der Ankerwicklung in axialer Richtung unterhalb oder bei Ausbildung des Jochelementes als Außenstatorteil oberhalb der Ankerwicklung angeordnet. Bei Unterteilung in zwei Jochteile erfolgt die Unterteilung mittig im Bereich der axialen Erstreckung der Ankerwicklung. Bei Unterteilung in mehr als zwei Jochteile sind die einzelnen Kontakt- und Berührungsflächen zwischen den einander benachbarten, in axialer Richtung angeordneten Jochteilen ebenfalls vorzugsweise in axialer Richtung betrachtet im Bereich der axialen Erstreckung der Ankerwicklung angeordnet. Dies bietet den Vorteil, daß aufgrund der anschlagflächenbildenden Funktion des Jochelementes bei Fixierung der Zahnelemente in radialer und axialer Richtung mittels sich durch das Jochelement erstreckender Befestigungselemente gleichzeitig die Jochteile in ihrer Lagezuordnung zueinander mit fixiert werden können. Zusätzliche Verbindungselemente für die Jochteile können dann entfallen. Dies dient einer Minimierung der Bauteilanzahl.

In einer Weiterentwicklung der Erfindung ist es jedoch auch möglich, durch unterschiedlich gestaltete Ausnehmungen die Lage und den Querschnitt der im Bereich der Trennebenen angeordneten Kühlkanäle in Umfangsrichtung zu verändern.

Unter einem weiteren Aspekt der Erfindung erfolgt die Unterteilung des Jochelementes in axialer Richtung in mehr als zwei Jochteile. Diese sind im montierten Zustand in axialer Richtung nebeneinander angeordnet und bilden im Bereich ihrer Kontaktebenen, das heißt in einander berührenden zueinanderweisenden Stirnseiten mindestens jeweils einen, sich in Umfangsrichtung erstreckenden und ringförmig ausgebildeten Kühlmittelkanal. Diesem ist entweder jeweils ein eigener Zulauf und mindestens ein eigener Ablauf zugeordnet oder aber den Kühlkanälen ist ein zentraler Verteilerkanal zugeordnet, welcher von den einzelnen Kühlkanälen gemeinsam genutzt wird, wobei jeder einzelne Kühlkanal über entsprechende Verbindungsleitungen mit dem zentralen Verteilerkanal verbunden ist. Der zentrale Verteilerkanal ist dabei vorzugsweise bei Ausführung mit drei Jochteilen im mittleren Jochteil angeordnet, wobei sich von diesem zentral in axialer Richtung die entsprechenden Verbindungskanäle erstrecken.

In einer Weiterentwicklung sind im Bereich einer Kontaktebene mehrere Kühlmittelkanäle in radialer Richtung übereinander angeordnet. Diese können ebenfalls über eine gemeinsame Versorgungsleitung mit Kühlmittel beaufschlagt werden, wobei der gemeinsamen Versorgungsleitung ein Zulauf und ein Ablauf zugeordnet ist. Diese Lösung ermöglicht vor allem bei größeren Maschinen auch mit kleineren Kühlkanälen eine optimale Kühlung.

In allen genannten Fällen kann der Zulauf und der Ablauf durch Kopplung an entsprechende Leitungsstränge in einem Kühlmittelkreislauf eingebunden werden, wobei es sich dabei um einen entweder separat der elektrischen Maschine zugeordneten Kühlmittelkreislauf handelt oder aber einen bei Einsatz in Antriebssträngen von Fahrzeugen oder stationären Anlagen bereits vorhandenen Kühlkreislauf, beispielsweise den Kühlkreislauf der Antriebsmaschine.

Die Kontaktebene beziehungsweise Berührungsebene für die zueinanderweisenden Stirnseiten der einzelnen Jochteile ist vorzugsweise senkrecht zu einer Ebene, welche durch die Rotationsachse und einer Senkrechten beschreibbar ist, beschreibbar. Ausführungen in einem Winkel sind ebenfalls denkbar, werden jedoch aus Gründen der Möglichkeit geringerer standardisierter Ausführungen vermieden. Bei allen genannten Ausführungen gemäß dem ersten Lösungsansatz sind das Jochelement beziehungsweise die einzelnen Jochteile in Umfangsrichtung einteilig ausgeführt.

Unter einem weiteren zweiten Lösungsansatz der Erfindung erfolgt neben der axialen Unterteilung die Ausgestaltung der Jochteile zusätzlich in mindestens zwei, vorzugsweise eine Vielzahl von Segementen, d. h. Jochteilsegmenten in Umfangsrichtung. Die Anordnung der einzelnen Segmente der einander in axialer Richtung benachbarten Jochteile erfolgt mit Versatz zueinander. Erfindungsgemäß ist eine Mehrzahl der Segmente derart ausgestaltet, daß dieses jeweils einen Kühlkanal aufweist, der sich in Umfangsrichtung über einen Teilbereich des entsprechenden Segmentes erstreckt. Der Kühlkanal wird dabei ebenfalls durch die axiale Aneinander-reihung der Jochteile gebildet. Vorzugsweise sind in den einander benachbarten Segmenten, welche in Umfangsrichtung um einen Betrag kleiner als die Segmenterstreckung zueinander versetzt sind jeweils Ausnehmungen vorgesehen, die bei Bildung der baulichen Einheit den Kühlkanal bilden bzw. begrenzen. Durch Befestigung der Zahnelemente, vorzugsweise bei Ausführung als Zahnring der Zahnringe an den einzelnen Jochteilen und bei Ausführung der Befestigungselemente mit Erstreckung durch die einzelnen Jochteile wird eine stabile Statoreinheit erreicht, welche vergleichbar mit einem Mauerwerk eine hohe Stabilität aufweist. Aufgrund der Segmentierung in Umfangsrichtung sind die einzelnen Segmente der Jochteile kleiner und können daher mit kleineren und schnelleren Pressen hergestellt werden, weshalb diese Lösung von der Fertigungsseite als sehr ökonomisch betrachtet werden muß.

Die Statorbaueinheit umfaßt ein Statorgehäuse zur Abstützung des Außen- und Innenstators. Der Außenstator umfaßt dabei in Umfangsrichtung eine Vielzahl von in bestimmten Abständen zueinander angeordneten Einzelelementen, welche als Zahnelemente, beispielsweise als im Querschnitt U-förmig gestaltete Vollelemente mit Zahnelementen ausgebildet sind und die dem Rotor in entsprechender Weise zugeordnet sind. Die Einzelelemente sind dabei aus pulvermetallurgisch hergestellten und verpreßten Materialien gefertigt und kraftund/oder formschlüssig mit dem Statorgehäuse verbunden. Im einfachsten Fall erfolgt die Befestigung mittels Befestigungselementen, beispielsweise in Form von Verbindungsschrauben oder Bolzen. Eine weitere Möglichkeit besteht in der Realisierung einer Klemmverbindung.

Die erfindungsgemäße Lösung wird nachfolgend anhand von Figuren erläutert. Darin ist im einzelnen folgendes dargestellt:
- Figur 1a und 1b: verdeutlichen anhand eines Ausschnittes aus einem Axialschnitt einer Statorbaueinheit den Grundaufbau einer erfindungsgemäß gestalteten Statoreinheit mit in axialer Richtung unterteiltem Jochelement;
- Figur 2: verdeutlicht eine Ausführung gemäß Figur 1 mit einer Mehrzahl von in radialer Richtung im Bereich einer Kontaktebene der einzelnen Jochelemente angeordneten Kühlkanälen;
- Figur 3: verdeutlicht eine Ausführung gemäß Figur 1 mit einer Mehrzahl von nebeneinander in axialer Richtung angeordneten Jochteilen;
- Fig. 4a: zeigt eine mögliche Ausführung eines Jochelementes mit Segmentierung der Jochteile in Kavalierperspektive;
- Fig. 4b-4c: verdeutlichen eine Ausführung eines in axialer Richtung unterteilten Jochelementes mit zusätzlicher Segmentierung in Umfangsrichtung in einer Statoreinheit in verschiedenen Ansichten.

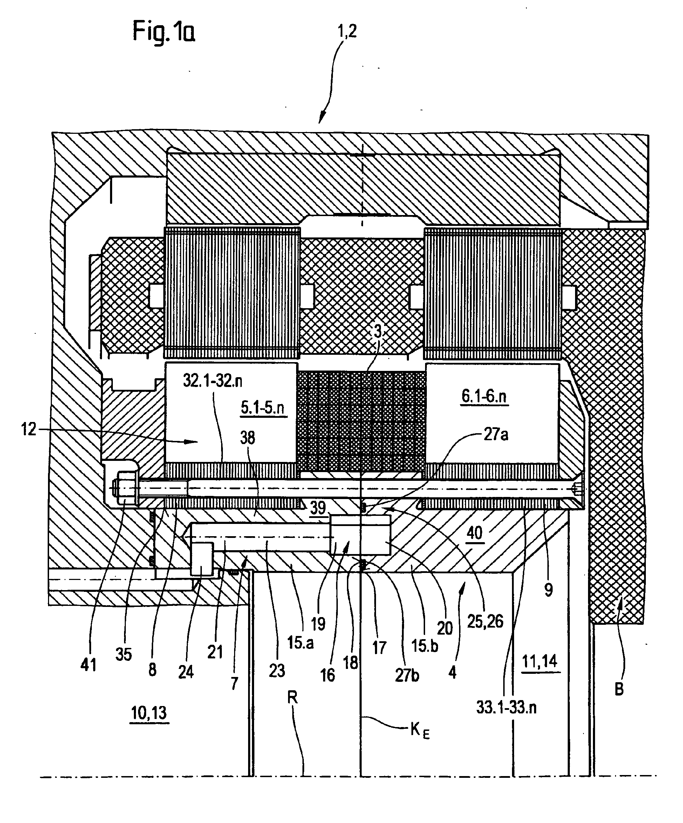

Die Figuren 1a und 1 b verdeutlichen anhand eines Ausschnittes aus einem Axialschnitt einer Statorbaueinheit 1 einer Synchronmaschine 2 mit transversaler Flußführung, insbesondere einer Transversalflußmaschine, den Grundaufbau einer, einer Phase zugeordneten und eine Ankerwicklung 3 tragenden erfindungsgemäß gestalteten Statoreinheit 4. Die Statoreinheit 4 umfaßt zwei Reihen von in Umfangsrichtung hintereinander angeordneten Zähnen 5.1 bis 5.n bzw. 6.1 bis 6.n und des weiteren ein ringförmiges Jochelement 7, welches aus einem metallischen Pulververbundwerkstoff besteht und die Funktion eines Rückschlußelementes ausübt. Die Statoreinheit 4 beschreibt eine in einer Ansicht im Axialschnitt der elektrischen Maschine gemäß Figur 1 bei Projizierung in eine durch die Rotationsachse R des Rotors B und einer Senkrechten S zu dieser beschreibbaren Ebene E im wesentlichen U-förmig ausgebildete Querschnittsfläche. Die jeweils in Umfangsrichtung hintereinander angeordneten Zähne 5.1 bis 5.n bzw. 6.1 bis 6.n können dabei beispielsweise als Einzelelemente ausgeführt sein und sind dann in entsprechender Weise einzeln mit dem Jochelement, vorzugsweise kraftschlüssig über Verbindungselemente 41 verbunden. Eine weitere, hier nicht dargestellte Möglichkeit besteht darin, eine Mehrzahl von Zähnen 5.1 bis 5.n zu sogenannten Zahnringsegmenten zusammenzufassen, welche in Umfangsrichtung hintereinander angeordnet sind. Vorzugsweise werden die Zähne 5.1 bis 5.n bzw. 6.1 bis 6.n jedoch von Zahnringen 8 und 9 gebildet, welche mindestens einmal, vorzugsweise jedoch nur einmal unterbrochen sind. Die Zahnringe 8 und 9 bilden sogenannte Weicheiseneinheiten 10 bzw. 11, wobei dieser Begriff für Elemente aus weichmagnetischen Werkstoffen steht. Diese bilden mit dem Jochelement 7 eine bauliche Einheit 12. Die Zahnringe 8 und 9 bilden im Querschnitt betrachtet zwei Schenkel 13 bzw. 14 der Statoreinheit 4. In Funktionslage stehen die Schenkel 13 und 14 dem Permanentmagneten des Rotors gegenüber. Entsprechend der Ausgestaltungdes Rotors sind die Zähne 5.1 bis 5.n bzw. 6.1 bis 6.n der beiden Zahnreihen 8, 9 in Umfangsrichtung zueinander um eine Polteilung versetzt oder aber ohne Vorsatz zueinander angeordnet. Zwischen den beiden Schenkeln 13 und 14, d. h. zwischen den mindestens einmal unterbrochenen Zahnringen 8 und 9 befindet sich von drei Seiten umschlossen die in Umfangsrichtung verlaufende Ankerwicklung 3. Erfindungsgemäß ist das Jochelement 7 gemäß einer ersten erfindungsgemäßen Ausführung in axialer Richtung mindestens zweiteilig ausgebildet. Dieses umfaßt dazu die Jochteile 15a und 15b, welche bei Montage der Statorbaueinheit 4 im montierten Zustand zur baulichen Einheit des Jochelementes 7 zusammengefaßt werden. Die beiden Jochteile 15a und 15b werden dabei im montierten Zustand zum Jochelement 7 unter Bildung mindestens eines Kühlkanales 16 im Bereich ihrer Kontaktebene K_{E} zusammengeführt. Zu diesem Zweck sind die beiden Jochteile 15a, 15b im einfachsten Fall derart ausgeführt, daß diese an den zueinander weisenden Stirnseiten - der Stirnseite 17 für das Jochteil 15a und der Stirnseite 18 für das Jochteil 15b - Ausnehmungen 19 bzw. 20 aufweisen, welche bei Zusammenführung der beiden Jochteile 15a und 15b den Kühlkanal 16 begrenzen. Der Kühlkanal 16 erstreckt sich vorzugsweise direkt in Umfangsrichtung und vorzugsweise über den gesamten Umfang als Kühlring. Die Kontur des Kühlkanals 16 ist dabei abhängig von der Ausführung der Ausnehmungen 19 und 20 an den Stirnseiten 17 bzw. 18 der einzelnen Jochteile 15a bzw. 15b. Vorzugsweise sind die jeweiligen Ausnehmungen 19 und 20 in den einzelnen Jochteilen 15a und 15b dazu als in Umfangsrichtung verlaufende Nuten oder Ausfräsungen ausgeführt, welche hinsichtlich ihrer geometrischen Abmessungen in Umfangsrichtung identisch ausgeführt sind, d. h. in der Höhe und der Breite nicht differieren. Dem Kühlkanal 16 sind zum Zwecke eines Kühlmittelumlaufes des weiteren mindestens ein Zulauf 21 und ein Ablauf 22 zugeordnet. Der Zulauf 21 und der in der Figur 1a nicht dargestellte Ablauf 22, da dieser in Umfangsrichtung versetzt zum Zulauf 21 im Jochteil 15a angeordnet ist, und in der Figur 1b dargestellte Ablauf 22 im Jochteil 15.b werden dabei vorzugsweise von sich durch die Jochteile 15a und/oder 15b erstreckenden Bohrungen, hier beispielsweise für den Zulauf 21 dargestellt die Bohrung 23, und in Figur 1b der Bohrung 42 gebildet. An diesen sind Mittel 24 zum Anschluß an entsprechende Kühlmittelversorgungseinrichtungen bzw. Kühlmittelleitungseinrichtungen vorgesehen. Vorzugsweise sind Zulauf 21 und Ablauf 22 wie in Figur 1a dargestellt einem Jochteil 15a oder 15b zugeordnet. Denkbar ist es jedoch auch, beide Jochteile 15a und 15b - wie in Figur 1b - hinsichtlich ihrer Ausführung identisch zu gestalten, so daß einem Jochteil der Zulauf 21 und einem Jochteil der Ablauf 22 zugeordnet wird. In diesem Fall ergibt sich das zweite Jochteil in Einbaulage durch Drehung um eine Senkrechte zur Rotationsachse R.

Die Anordnung des Kühlkanales 16 und damit die Lage der Kontaktebene K_{E} erfolgt dabei in axialer Richtung vorzugsweise in einem Bereich der Statoreinheit 4 mittig bezogen auf die Lage der Ankerwicklung 3 in axialer Richtung. Der Abstand zur Ankerwicklung 3 wird dabei derart gewählt, daß keine Kollision mit form- und/oder kraftschlüssigen Verbindungselementen 41 für die Koppelung der Zahnringe 8, 9 bzw. der einzelnen Zahnelemente 5.1-5.n und 6.1 bis 6.n mit den Jochteilen 15a, 15b, welche gleichzeitig der Verbindung der Jochteile 15a und 15b dienen, erfolgt und des weiteren trotzdem eine optimale Wärmeabfuhr vom Jochelement 7 gewährleistet wird. Der Querschnitt des Kühlkanals 16 wird vorzugsweise ebenfalls unter diesem Gesichtspunkt festgelegt. Zur Vermeidung des Austrittes von Kühlmittel sind im Kühlkanal 16 Mittel zur Abdichtung gegenüber der Ankerwicklung 3 und dem Gehäuseinneren zugeordnet. Diese Mittel sind mit 25 bezeichnet und umfassen mindestens eine Dichteinrichtung 26, welche wie im dargestellten Beispiel zwei ruhende Dichtungen 27a und 27b zwischen den beiden Jochteilen 15a und 15b umfaßt. Diese sind in radialer Richtung ausgehend von der Rotationsachse R jeweils oberhalb und unterhalb des Kühlkanals 16 angeordnet. Vorzugsweise erfolgt bei einer zweiteiligen Ausführung des Jochelementes 7 durch Unterteilung in die Jochteile 15a und 15b die Ausbildung des Kühlkanals 16 lediglich als einzelner Kühlkanal, welcher in Umfangsrichtung ringförmig verläuft, wobei bezüglich der Querschnitts-fläche keine Restriktionen bestehen.

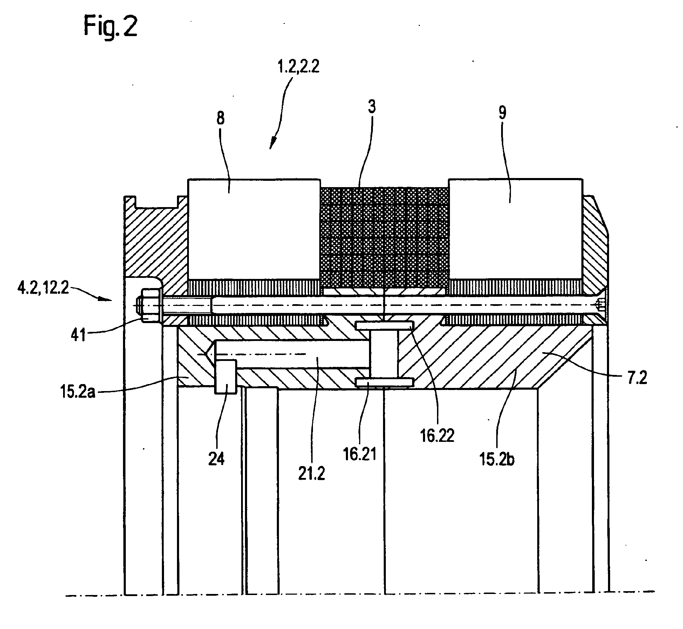

Bei entsprechend großen Maschinen und damit großen Statorbaueinheiten 1 ist es jedoch auch denkbar, nicht nur einen Kühlkanal 16 vorzusehen, sondern im Bereich der Kontaktebene K_{E} mindestens einen, vorzugsweise jedoch mehrere in radialer Richtung übereinander angeordnete Kühlkanäle 16.21 und 16.22 vorzusehen. Die Kühlkanäle können dabei miteinander - wie in Figur 2 dargestellt - über einen gemeinsamen Zulauf 21.2 und/oder nicht dargestellten Ablauf 22.2 im Jochteil 15.2a gekoppelt sein, es besteht jedoch auch die Möglichkeit, diesen unterschiedliche Zuläufe und Abläufe in den beiden Jochteilen 15.2a und 15.2b zuzuordnen. Der übrige Aufbau der Statoreinheit 4.2 entspricht im wesentlichen dem in den Figuren 1a und 1b beschriebenen. Für gleiche Elemente werden daher die gleichen Bezugszeichen verwendet.

Ferner ist in der Figur 1 eine Außenstatoreinheit 48 zu erkennen, welche ebenfalls einer Phase zugeordnet ist und der Bestandteil eines Außenstators 49 der Statorbaueinheit ist. Die Statorbaueinheit umfaßt ferner in einer Ansicht von rechts betrachtet, wie in der Figur 1b dargestellt, ein Statorgehäuse 50, an welchem die Außenstatoreinheit 48 und die Innenstatoreinheit 4 entweder direkt oder über weitere Elemente abgestützt sind. Die Außenstatoreinheit 48 ist frei von einer Ankerwicklung. Diese umfaßt in Umfangsrichtung eine Vielzahl von in bestimmten Abständen zueinander angeordneten, im Querschnitt U-förmig gestalteten Einzelelementen 51.1 bis 51.n, welche als Vollelemente mit Zähnen 52.11 bis 52.1n beziehungsweise 52.21 bis 52.2n bezeichnet sind, welche dem Rotor in entsprechend komplementärer Weise zugeordnet sind. Die Einzelelemente 51.1 bis 51.n sind aus pulvermetallurgisch hergestellten und verpreßten Materialien gefertigt und form- und/oder kraftschlüssig mit dem Statorgehäuse 50 verbunden. Im einfachsten Fall werden Befestigungselemente gewählt. Denkbar sind jedoch auch Klemmverbindungen oder eine Kombination aus verschiedenen Verbindungsarten.

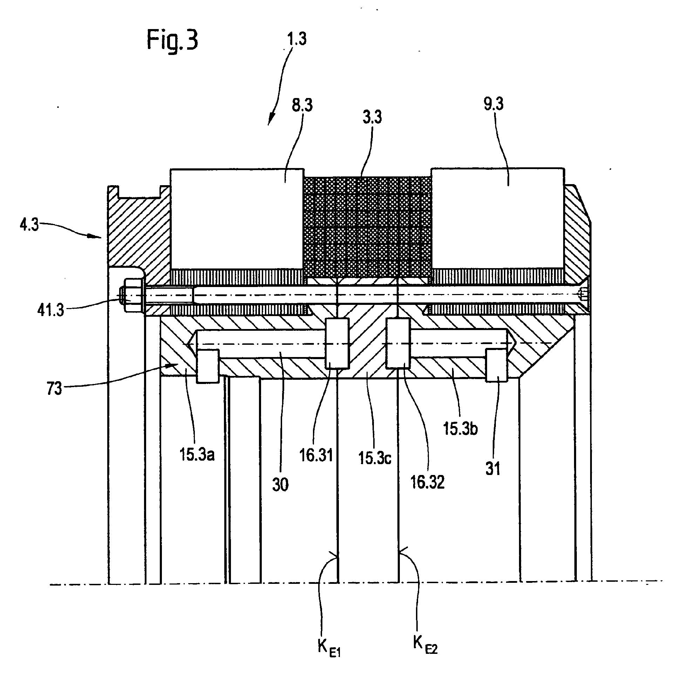

Die Figur 3 verdeutlicht eine weitere Ausführung einer erfindungsgemäßen Lösung gemäß Figur 1, bei welcher die Statorbaueinheit 1.3 ein Jochelement 7.3 umfaßt, welches die Jochteile 15.3a, 15.3b und 15.3c aufweist. Die einzelnen Jochteile 15.3a, 15.3b und 15.3c berühren sich dabei im montierten Zustand jeweils im Bereich ihrer zueinander zugewandten Stirnseiten, welche hier mit 17.3 für das Jochelement 15.3a, 18.3 für das Jochelement 15.3b und 28 bzw. 29 für das Jochelement 15.3c bezeichnet sind. Die Kontaktebene K_{E1} zwischen den Jochteilen 15.3a und 15.3c und K_{E2} zwischen den Jochteilen 15.3c und 15.3b sind im dargestellten Fall vorzugsweise in axialer Richtung im Bereich des Jochelementes 7.3 angeordnet, welcher die Ankerwicklung 3.3 trägt. Dies bietet den Vorteil, daß bereits mit Befestigung der Zahnringe 8.3 und 9.3 eine Zusammenfassung der einzelnen Jochteile 15.3a, 15.3b und 15.3c zu einer baulichen Einheit erfolgen kann, ohne daß zusätzliche weitere Befestigungselemente in axialer Richtung zur Lagefixierung der einzelnen Jochteile 15.3a, 15.3b und 15.3c zueinander vorzusehen sind. Den Kühlkanälen 16.31 und 16.32 sind in den Jochteilen 15.3a und 15.3b jeweils ein separater Zulauf 30 bzw. 31 und ein hier nicht dargestellter separater Ablauf zugeordnet. Die einzelnen Zuläufe 30 bzw. 31 und Abläufe können dabei jedoch außerhalb der Statoreinheit 4 miteinander gekoppelt werden. Bei allen Lösungen gemäß den Figuren 1 bis 3 wird die Ringstruktur des Jochelementes 7 beziehungswiese von dessen Einzelteilen beibehalten, was einer vereinfachten Montage und Fertigung dient.

Der Grundaufbau der Statoreinheiten 4 bzw. 4.2 und 4.3 gemäß der Figuren 1 bis 3 erfolgt im wesentlichen wie in der Figur 1 beschrieben. Für gleiche Elemente werden daher die gleichen Bezugszeichen verwendet. Die einzelnen Zahnringe 8 und 9 sind dabei vorzugsweise als axial geschichtete Blechpakete ausgeführt. Jeder Zahnringe 8 bzw. 9 der Statoreinheit 4 bzw. 4.2 oder 4.3 umfaßt dazu eine Mehrzahl von in axialer Richtung hintereinander angeordneten ringförmigen Elementen in Form von Blechplatten 32.1 bis 32.n bzw. 33.1 bis 33.n. Die Beabstandung der einzelnen Zähne 5.1 bis 5.n bzw. 6.1 bis 6.n mit einer bestimmten Teilung T zueinander wird durch die Ausführung bzw. Ausbildung randoffener Schlitze realisiert. Bei der dargestellten Ausführung der Statoreinheit 4 handelt es sich um eine Anwendung für einen Innenstator. Denkbar ist jedoch auch, diese Lösung als Außenstator in einer Statorbaueinheit 1 zu verwenden. Das Jochelement 7 ist ringförmig ausgeführt. Für die Kupplung zwischen den einzelnen Zahnringen 8 und 9 oder bei Einzelausführung der Zähne 5.1 bis 5.n bzw. 6.1 bis 6.n mit dem Jochelement 7, welches im Funktionszustand als sogenannter Rückschlußring fungiert, und mechanisch die Funktion eines Tragelementes übernimmt, bestehen eine Vielzahl von Möglichkeiten. Vorzugsweise wird bei Ausführung der Zahnringe aus Weicheisenblechpaketen in geschlitzter Ausführung eine kraftschlüssige Kopplung zwischen dem Jochelement 7 und den einzelnen Blechplatten 32.1 bis 32.n bzw. 33.1 bis 33.n gebildeten Zahnringen 8 bzw. 9 vorgenommen. Dies kann im einfachsten Fall durch eine Preßverbindung erfolgen. In diesem Fall sind die einzelnen Elemente der Statoreinheit 4, ringförmiges Jochelement und die Zahnringe 8 bzw. 9 derart hinsichtlich ihrer Abmessungen auszulegen, daß diese eine bestimmte Passung miteinander einnehmen. Im einzelnen betrifft das wenigestens die miteinander in Wirkverbindung tretenden Flächenbereiche, welche an der zum Rotor ausgerichteten Stirnseite 34 des ringförmigen Jochelementes 7 ausgebildet sind und die mit diesen in Wirkverbindung tretenden Flächenbereiche an der zum Jochelement 7 hingerichteten Stirnseiten 35 bzw. 36 der Zahnringe 8 bzw. 9.

Andere Möglichkeiten der Kopplung zwischen den Zahnringen 8 und 9 und dem ringförmigen Jochelement in radialer und axialer Richtung bestehen in formschlüssigen Verbindungen bzw. in form- und kraftschlüssigen Verbindungen. Dazu ist es beispielsweise denkbar, die Zahnringe 8 und 9 mit entsprechenden Vorsprüngen zu versehen, welche in dazu komplementär ausgeführten Ausnehmungen am Jochelement 7 eingeführt werden können und mit diesen beispielsweise mittels einer Schnappverbindung formschlüssig verbunden werden. Im einzelnen sind eine Vielzahl von Ausführungsmöglichkeiten denkbar, auf welche jedoch hier im Einzelfall nicht eingegangen werden soll, da die Möglichkeit bei Kenntnis des erfindungsgemäßen Grundgedankens im Tätigkeitsbereich des zuständigen Fachmannes liegt.

Die Ankerwicklung 3, welche zwischen den beiden von den Zahnringen 8 und 9 gebildeten Schenkeln 13 und 14 angeordnet ist, wird bei Ausbildung der Statoreinheit 4 als Innenstator direkt auf den von Teilflächen der Stirnseiten 35 und 36 freien Bereich der zum Rotor hingerichteten Fläche 34 des Jochelementes 7 aufgewickelt. Durch die in Umfangsrichtung als Baueinheit ausgeführte Ausbildung der Zahnringe 8 und 9 wird die Ankerwicklung in axialer Richtung fixiert. Die Fixierung in radialer Richtung ergibt sich bei Ausführung der Statorbaueinheit 1 als Innenstator als wicklungstragende Statoreinheit 4 durch die beim Wickeln erzeugte Straffheit. Die Ankerwicklung 3 liegt dabei direkt auf einer Teilfläche 37 der zum Rotor hin ausgerichteten Fläche 34 des Jochelementes 7 auf. Zur genauen Fixierung der Lage der Zahnringe 8 und 9 in axialer Richtung beim Einbau ist das ringförmige Jochelement 7 vorzugsweise in drei Teilabschnitte unterschiedlichen Durchmessers untergliedert, die von den einzelnen Jochteilen - je nach Ausführung gemäß der Figuren 1 bis 3 15.a, 15.b, 15.2a, 15.2b oder 15.3a, 15.3b und 15.3c - gebildet werden, einen Teilabschnitt 38, einen zweiten Teilabschnitt 39 und einen dritten Teilabschnitt 40. Diese Teilabschnitte sind dabei jeweils Bestandteil der einzelnen Jochteile 15a und 15b bzw. bei dreiteiliger Ausführung 15.3a, 15.3b und 15.3c. Der Begriff Abschnitt bedeutet keine bauliche Trennung, sondern lediglich eine in axialer Richtung hinsichtlich der Betrachtungsweise erfolgende Untergliederung.

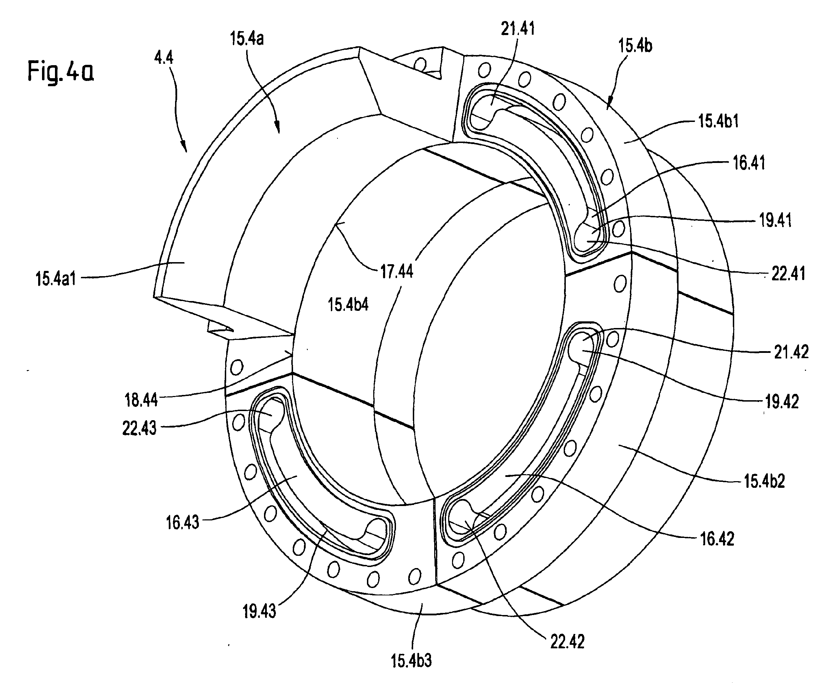

Die Figuren 4a bis 4d verdeutlichen eine Weiterentwicklung einer erfindungsgemäßen Ausführung einer Statorbaueinheit 1.4, insbesondere einer Statoreinheit 4.4 in drei Ansichten. Figur 4a verdeutlicht einen Ausschnitt aus einem Jochteil 7.4 in Kavalierperspektive. Das Jochelement 7.4 ist in axialer Richtung betrachtet ebenfalls wenigstens in zwei Jochteile 15.4a und 15.4b unterteilt. Zusätzlich erfolgt erfindungsgemäß eine weitere Unterteilung der Jochteile 15.4a und 15.4b in Umfangsrichtung in Einzelsegmente 15.4a1-15.4an und 15.4b1-15.4bn. Die Zusammenfügung zu einer baulichen Einheit 12.4 in Form des Jochteiles 7.4 erfolgt durch Versatz der Jochteile 15.4a und 15.4b in Umfangsrichtung hinsichtlich ihrer Segmentierung, d. h. durch Versatz der in Umfangsrichtung angeordneten Segmente 15.4a1-15.4an und 15.4b1-15.4bn um einen Betrag, welcher geringer ist, als die Erstreckung eines Segmentes in Umfangsrichtung. Die beiden Jochteile 15.4a und 15.4b, insbesondere die Jochteilsegmente 15.4a1-15.4an und 15.4b1-15.4bn werden dabei im montierten Zustand zum Jochelement 7.4 unter Bildung mindestens eines entweder segmentübergreifenden oder nur in einem Segment integrierten Kühlkanales 16.41, 16.42, 16.43 im Bereich ihrer axialen Kontaktebene K_{E} zusammengeführt, wobei im letztgenannten Fall das angrenzende Segment den Kühlkanal begrenzt. Zu diesem Zweck sind die in axialer Richtung aneinander angrenzenden Jochteile - im dargestellten Fall die Jochteilsegmente 15.4a1, 15.4b4 im einfachsten Fall derart ausgeführt, daß diese an den zueinander weisenden Stirnseiten - der Stirnseite 17.44 für das Jochteilsegment 15.4a4 und der Stirnseite 18.44 für das Jochteilsegment 15.4b4 - hier nicht dargestellte Ausnehmungen 19.44 bzw. 20.44 aufweisen, welche bei Zusammenführung der beiden Jochteilsegmente 15.4a4 und 15.4b4 den Kühlkanal 16.44 begrenzen. Der Kühlkanal 16 erstreckt sich vorzugsweise direkt in Umfangsrichtung der miteinander zu koppelnden Segmente. Die Kontur des einzelnen Kühlkanals 16 ist dabei abhängig von der Ausführung der Ausnehmungen 19.44 und 20.44 an den Stirnseiten 17.44 bzw. 18.44 der einzelnen Jochteilsegmente 15.4a4 bzw. 15.4b4. Zur Veranschaulichung sind in der teilweisen Darstellung der Statoreinheit 4.4 die Kühlkanäle 16.41, 16.42 und 16.43 bzw. der diesen bildenden Teil in den Jochteilsegmenten 15.4b1, 15.4b2 und 15.4b3 dargestellt. Vorzugsweise sind die jeweiligen Ausnehmungen 19.41, 19.42, 19.43, 19.44 und 20.41, 20.42, 20.43, 10.44 in den einzelnen Jochteilsegmenten der Jochteile 15.4a und 15.4b dazu als in Umfangsrichtung des entsprechenden Segmentes verlaufende Nuten oder Ausfräsungen ausgeführt, welche hinsichtlich ihrer geometrischen Abmessungen in Umfangsrichtung identisch ausgeführt sind, d. h. in der Höhe und der Breite nicht differieren. Den Kühlkanälen 16.41 bis 16.4n sind zum Zwecke eines Kühlmittelumlaufes des weiteren mindestens jeweils ein Zulauf - hier 21.41, 21.42, 21.43 und ein Ablauf 22.41. 22.42, 22.43 zugeordnet. Die Zuläufe und Abläufe werden dabei vorzugsweise von sich durch die Jochteile 15.4a und/oder 15.4b erstreckenden Bohrungen gebildet. An diesen sind Mittel 24 zum Anschluß an entsprechende Kühlmittelversorgungseinrichtungen bzw. Kühlmittelleitungseinrichtungen vorgesehen.

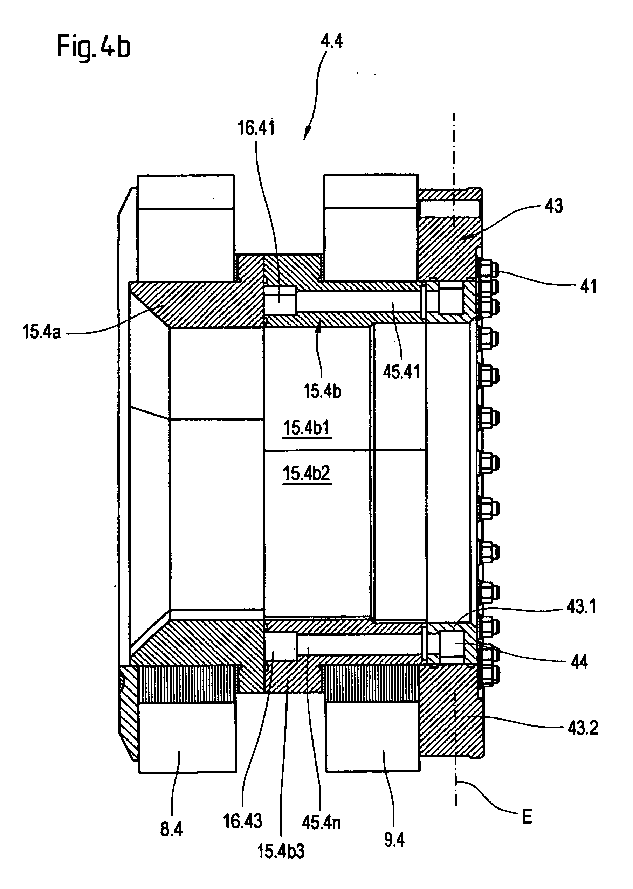

Die in der Figur 4a dargestellte Ausführung des Jochteiles 7.4 in Kavaliersperspektive stellt eine mögliche Grundvariante dar, welche um entsprechende zusätzliche Merkmale erweitert werden kann. Die Figur 4b verdeutlicht dabei eine mögliche Ausführungsform einer Statorbaueinheit, insbesondere den Teil Statoreinheit 4.4, welcher hinsichtlich des Grundaufbaues aus Jochelement 7.4 und den Zahnringen 8.4 und 9.4 im wesentlichen dem in den Figuren 1 bis 3 beschriebenen entspricht.

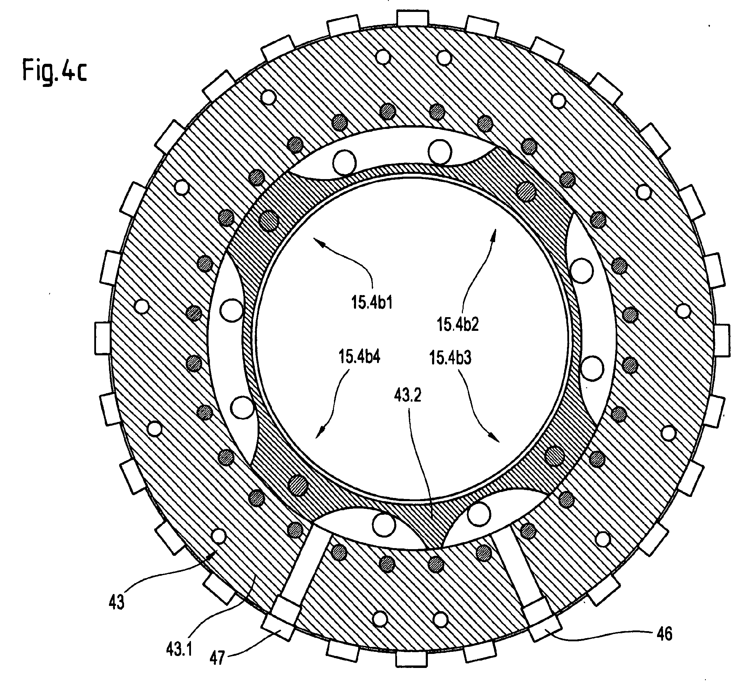

Zusätzlich zu der in Figur 4a dargestellten Ausführung ist jedoch die Statoreinheit 4.4 um ein weiteres Element, ein Verteilerelement 43 erweitert. Bezüglich des Aufbaues der Jochteilsegmente kann auf die Figur 4a verwiesen werden. Dabei können die Kühlkanäle zum einen nur in einem Jochteil 15.4a oder 15.4b wie in Figur 4b verdeutlicht vorgesehen werden, denkbar ist jedoch auch, eine Bildung der Kühlkanäle durch die entsprechenden Ausnehmungen in den einzelnen aneinander in axialer Richtung angrenzenden Segmenten. In einer bevorzugten Ausführung sind jedoch wie in der Figur 4b dargestellt, lediglich in einem Jochteil 15.4a oder 15.4b, hier 15.4b, die Kühlkanäle 16.4 angeordnet. Die in Umfangsrichtung in den einzelnen Segmenten 15.4b1 bis 15.4bn angeordneten Kühlkanäle 16.41 bis 16.4n sind jeweils in sich geschlossen ausgeführt, d. h. es besteht keinerlei Verbindung zum jeweils anderen Segment. Jedem Kühlkanal 16.41 bis 16.4n sind dabei ein eigener Zulauf und/oder ein Ablauf zugeordnet. Vorzugsweise erfolgt eine Zuordnung von jeweils einem Zulauf und einem Ablauf zum Kühlkanal. Die Versorgung mit Kühlmittel erfolgt vorzugsweise aus einer gemeinsamen Kühlmittelquelle über ein Verteilerelement 43, in welchem mindestens ein Verteilerkanal 44 angeordnet ist, der mit den entsprechenden Verbindungskanälen 45.41 bis 45.4n zu den einzelnen Kühlkanälen 16.41 bis 16.4n verbunden ist. Das Verteilerelement 43 ist dabei in zwei Teilelemente 43.1 und 43.2 unterteilt, wobei das erste Teilelement 43.1 den Verteilerkanal 44 mit entsprechender Mündung zu den Verbindungsleitungen enthält und das zweite Teilelement 43.2 lediglich eine zentrale Zu- und Ablaufleitung beinhaltet. Die zentrale Zu- und Ablaufleitung sind in einer Ansicht in einer um einen Winkel gedrehte Schnittdarstellung E gemäß Figur 4b in Figur 4c mit 46 und 47 bezeichnet.

Andere Ausführungsmöglichkeiten sind ebenfalls denkbar. Die radiale und axiale Fixierung der einzelnen Elemente des Jochteiles 7.4, insbesondere der einzelnen Jochteile 15.4a und 15.4b erfolgt dabei vorzugsweise mittels der form- und kraftschlüssigen Verbindungselemente 41 zur Fixierung der Zahnringe 8.4 und 9.4 am Jochteil 7.4. Zusätzliche Maßnahmen sind ebenfalls denkbar, beispielsweise eine stoffschlüssige Verbindung zwischen den einzelnen Jochteilen oder zusätzliche Verbindungselemente, welche nicht der Befestigung der einzelnen Zahnringe dient.

In allen Fällen ist das Kühlsystem für die Synchronmaschine entweder als autarkes Kühlsystem in Antriebssträngen betreibbar oder aber in andere Kühlsysteme, beispielsweise dem Kühlsystem einer Antriebsmaschine eingebunden.

### Bezugszeichenliste

- 1, 1.2, 1.3, 1.4: Statorbaueinheit
- 2, 2.2, 2.3, 2.4: Synchronmaschine
- 3, 3.2, 3.3: Ankerwicklung
- 4, 4.2, 4.4, 4.4: Innenstatoreinheit
- 5.1-5.n: Zähne
- 6.1-6.n: Zähne
- 7, 7.2, 7.3, 7.4: Jochelement
- 8, 8.2, 8.3: Zahnring
- 9, 9.2, 9.3: Zahnring
- 10: Weicheiseneinheit
- 11: Weicheiseneinheit
- 12, 12.2, 12.3, 12.4: bauliche Einheit
- 13: Schenkel
- 14: Schenkel
- 15a, 15b, 15.2a, 15.2b, 15.3a, 15.3b, 15.3c: Jochteile
- 16, 16.21, 16.22, 16.31, 16.32, 16.41, 16.42, 16.43, 16.44: Kühlkanal
- 17, 17.41, 17.42, 17.43, 17.44: Stirnseite des Jochteiles 15a
- 18, 18.41, 18.42, 18.43, 18.44: Stirnseite des Jochteiles 15b
- 19: Ausnehmung
- 20: Ausnehmung
- 21, 21.2: Zulauf
- 22: Ablauf
- 23: Bohrung
- 24: Mittel zum Anschluß einer Kühlmittelversorgungseinrichtung
- 25: Mittel zur Abdichtung der Kühlkanäle gegenüber dem Gehäuse und der Ankerwicklung
- 26: Dichteinrichtung
- 27a, 27b: ruhende Dichtung
- 28: Stirnseite
- 29: Stirnseite
- 30: Zulauf
- 31: Zulauf
- 32.1-32.n: Blechplatten
- 33.1-33.n: Blechplatten
- 34: Stirnseite
- 35: Stirnseite
- 36: Stirnseite
- 37: Teilfläche
- 38: Teilabschnitt
- 39: Teilabschnitt
- 40: Teilabschitt
- 41: Verbindungskanal
- 42: Bohrung
- 43: Verteilerelement
- 43.1, 43.2: Teilelement
- 44: Verteilerkanal
- 45.41-45.4n: Verbindungskanal
- 46: Zufuhrkanal
- 47: Ablaufkanal
- 48: Außenstatoreinheit
- 49: Außenstator
- 50: Statorgehäuse
- 51.1 - 51.n: Einzelelemente
- 52.11-52.1n: Zähne
- 52.21 - 52.2n: Zähne
- K_{E}: Trennebene
- K_{E1}: Kontaktebene
- K_{E2}: Kontaktebene
- R: Rotationsachse
- B: Rotor

## Patentansprüche

1. Statorbaueinheit (1; 1.2; 1.3; 1.4) für eine Synchronmaschine (2; 2.2) mit transversaler Flußführung, insbesondere eine Transversalflußmaschine mit mindestens einer Phase, umfassend einen Außenstator und einen Innenstator
1.1 mit einer, einer Phase zugeordneten, eine Ankerwicklung (3) tragenden Innenstatoreinheit (4; 4.1, 4.2, 4.3; 4.4), welche in Einbaulage einem Rotor (5; 5.2) unter Bildung eines, bezogen auf die Rotationsachse des Rotors (5; 5.2) der Synchronmaschine (1; 1.2), in radialer Richtung angeordneten Luftspaltes (6) zugeordnet ist;
1.2 die Innenstatoreinheit (4; 4.1; 4.2; 4.3) umfaßt zwei Reihen von in Umfangsrichtung hintereinander angeordneten Zähnen (5.1 - 5.n, 6.1 - 6.n), welche an einem ringförmigen, aus einem metallischen Pulververbundwerkstoff gefertigten Jochelement (7; 7.2; 7.3; 7.4) befestigt sind;
1.3 die einer Phase zugeordnete Außenstatoreinheit ist frei von einer Ankerwicklung, **gekennzeichnet durch** das folgende Merkmal:
1.4 das Jochelement (7; 7.2; 7.3; 7.4) der Innenstatoreinheit umfaßt mindestens zwei in axialer Richtung nebeneinander angeordnete Jochteile (15a, 15b; 15.2a, 15.2b; 15.3a, 15.3b, 15.3c; 15.4a, 15.4b);
1.5 die beiden in axialer Richtung einander benachbart angeordneten Jochteile (15a, 15b; 15.2a, 15.2b; 15.3a, 15.3b, 15.3c; 15.4a, 15.4b)) werden unter Bildung mindestens eines Kühlkanales (16; 16.21, 16.22; 16.31, 16.32; 16.41, 16.42, 16.43, 16.44) im Bereich der Kontaktebene (K_{E}, K_{E1}, K_{E2}) zu einer baulichen Einheit (12; 12.2; 12.3, 12.4) zusammengefaßt.

2. Statorbaueinheit (1; 1.2; 1.3; 1.4) nach Anspruch 1, **dadurch gekennzeichnet, daß** der Kühlkanal (16; 16.21, 16.22; 16.31, 16.32; 16.41, 16.42, 16.43, 16.44) flüssigkeits- und druckdicht ausgeführt ist.

3. Statorbaueinheit (1; 1.2; 1.3; 1.4) nach einem der Ansprüche 1 oder 2, **dadurch gekennzeichnet, daß** die Kontaktebene (K_{E}; K_{E1}; K_{E2}) zwischen jeweils zwei einander in axialer Richtung benachbart angeordneter Jochteile (15a, 15b; 15.2a, 15.2b; 15.3a, 15.3b, 15.3c; 15.4a, 15.4b) in axialer Richtung betrachtet in einem Bereich angeordnet ist, der durch die Anordnung der Ankerwicklung (3) beschreibbar ist.

4. Statorbaueinheit (1; 1.3) nach Anspruch 3, **dadurch gekennzeichnet, daß** eine Mehrzahl von miteinander zu einer baulichen Einheit (12; 12.3) zusammenfaßbaren Jochteilen (15.3a, 15.3b, 15.3c) vorgesehen sind, deren Kontaktebenen (K_{E1}; K_{E2}) in axialer Richtung in einem Bereich der durch die axiale Erstreckung der Ankerwicklung (3.3) beschreibbar ist, angeordnet sind.

5. Statorbaueinheit (1; 1.2) nach einem der Ansprüche 1 bis 4, **gekennzeichnet durch** die folgenden Merkmale:
5.1 mit einer Mehrzahl von Kühlkanälen (16.21, 16.22); mit
5.2 die Kühlkanäle (16.21, 16.22) sind in radialer Richtung im Bereich der Kontaktebene zwischen zwei einander benachbart angeordneter Jochteile übereinander angeordnet.

6. Statorbaueinheit (1; 1.2; 1.3; 1.4) nach einem der Ansprüche 1 bis 5, **gekennzeichnet durch** die folgenden Merkmale:
6.1 wenigstens eines der einander benachbart angeordneten Jochteile (15a, 15b; 15.2a, 15.2b; 15.3a, 15.3b, 15.3c; 15.4a, 15.4b) weist an seiner zum jeweils benachbarten Jochteil (15a, 15b; 15.2a, 15.2b; 15.3a, 15.3b, 15.3c; 15.4a, 15.4b) ausgerichteten Stirnseite (17; 17.41, 17.42, 17.43, 17.44; 18; 18.41, 18.42, 18.43, 18.44) mindestens eine Ausnehmung (19, 20) auf;
6.2 die Stirnseiten (17; 17.41, 17.42, 17.43, 17.44; 18; 18.41, 18.42, 18.43, 18.44) mit den darin enthaltenen Ausnehmungen (19, 20) begrenzen einen Kühlkanal (16) oder bilden einen Freiraum zur Führung eines Kühlkanals.

7. Statorbaueinheit (1; 1.2, 1.3) nach einem der Ansprüche 4 bis 6, **dadurch gekennzeichnet, daß** den Kühlkanäle (16.21, 16.22, 16.31, 16.32) mindestens ein zentraler Verteilerkanal (21.1) zur Zufuhr von Kühlmittel mit mindestens einem Zufuhrkanal und/oder mindestens einem Abfuhrkanal vorgesehen sind.

8. Statorbaueinheit (1; 1.2, 1.3; 1.4) nach einem der Ansprüche 1 bis 7, **dadurch gekennzeichnet, daß** den Kühlkanäle (16.21, 16.22; 16.31, 16.32; 16.41, 16.42, 16.43, 16.44) oder einem Teil der Kühlkanäle jeweils ein Zufuhrkanal (21.2, 21.3, 21.41, 21.42, 21.43, 21.44) und/oder ein Abfuhrkanal (22.2; 22.3; 22.41, 22.42, 22.43, 22.44) für Kühlmittel zugeordnet sind.

9. Statorbaueinheit (1; 1.2; 1.3) nach einem der Ansprüche 1 bis 8, **dadurch gekennzeichnet, daß** der einzelne Kühlkanal (16; 16.21, 16.22, 16.31, 16.32) ringförmig in Umfangsrichtung oder leicht geneigt gegenüber dieser verläuft.

10. Statorbaueinheit (1;1.2) nach einem der Ansprüche 1 bis 9, **dadurch gekennzeichnet, daß** der einzelne Kühlkanal (16; 16.21, 16.22; 16.31, 16.32) sich in Umfangsrichtung wenigstens über einen Teil des Jochteiles (7; 7.2; 7.3) erstreckt.

11. Statorbaueinheit (1.4) nach einem der Ansprüche 1 bis 9, **gekennzeichnet durch** die folgenden Merkmale:
11.1 jedes Jochteil (15.4a, 15.4b) ist in Umfangsrichtung in eine Mehrzahl von Segmenten (15.4a1, 15.4a2, 15.4a3, 15.4a4, 15.4b1, 15.4b2, 15.4b3, 15.4b4) unterteilt;
11.2 die Segmente (15.4a1, 15.4a2, 15.4a3, 15.4a4, 15.4b1, 15.4b2, 15.4b3, 15.4b4) zweier einander in axialer Richtung benachbarter Jochteile (15.4a, 15.4b) sind in Einbaulage um einen Betrag kleiner als die Erstreckung dieser in Umfangsrichtung zueinander versetzt angeordnet;
11.3 wenigstens ein Teil der Segmente (15.4a1, 15.4a2, 15.4a3, 15.4a4, 15.4b1, 15.4b2, 15.4b3, 15.4b4) ist an der Bildung eines Kühlkanales (16.41, 16.42, 16.43, 16.44) beteiligt.

12. Statorbaueinheit (1.4) nach Anspruch 11, **dadurch gekennzeichnet, daß** die Segmente (15.4a1, 15.4a2, 15.4a3, 15.4a4, 15.4b1, 15.4b2, 15.4b3, 15.4b4) miteinander form- und/oder kraftschlüssig und/oder stoffschlüssig miteinander verbunden sind.

13. Statorbaueinheit (1.4) nach einem der Ansprüche 11 oder 12, **gekennzeichnet durch** das folgende Merkmal:
13.1 jedem Kühlkanal (16.41, 16.42, 16.43, 16.44) sind ein Zufuhr- (21.41, 21.42, 21.43, 21.44) und ein Abfuhrkanal (22.41, 22.42, 22.43, 22.45) zugeordnet.

14. Statorbaueinheit (1.4) nach Anspruch 13, **dadurch gekennzeichnet, daß** die Zufuhrkanäle (21.41, 21.42, 21.43, 21.44) und die Abfuhrkanäle (22.41, 22.42, 22.43, 22.45) über jeweils einen zentralen Verteilerkanal mit einer zentralen Zufuhrleitung und/oder einer zentralen Abfuhrleitung gekoppelt sind.

15. Statorbaueinheit (1; 1.2; 1.3; 1.4) nach einem der Ansprüche 1 bis 14, **gekennzeichnet durch** die folgenden Merkmale:
15.1 die Jochteile (15a, 15b; 15.2a, 15.2b; 15.3a, 15.3b, 15.3c; 15.4a, 15.4b) oder die jeweils äußeren Jochteile bei einer Mehrzahl von Jochteilen bilden an den voneinander wegweisen. Stirnseiten jeweils einen Anschlag für eine Reihe von Zähnen (6.1, 6.n, 5.1, 5.n);
15.2 mit Befestigungsmitteln für die Zähne (5.1-5.n, 6.1-6.n) am Jochelement (7; 7.2; 7.3; 7.4);
15.3 mit Mitteln zur axialen und radialen Lagefixierung der einzelnen Jochteile zueinander.

16. Statorbaueinheit (1; 1.2; 1.3; 1.4) nach Anspruch 15, **dadurch gekennzeichnet, daß** die Befestigungsmittel für die Zähne (5.1-5.n; 6.1-6.n) und die Mittel zur axialen und radialen Lagefixierung der einzelnen Jochteile (15a, 15b; 15.2a, 15.2b; 15.3a, 15.3b, 15.3c; 15.4a, 15.4b) von den gleichen Bauelementen in Form von kraft- und/oder formschlüssigen Verbindungselementen gebildet werden.

17. Statorbaueinheit (1; 1.2; 1.3; 1.4) nach einem der Ansprüche 1 bis 16, **gekennzeichnet durch** die folgenden Merkmale:
17.1 mit einem Statorgehäuse zur Abstützung des Außen- und Innenstators;
17.2 die einer Phase zugeordnete Außenstatoreinheit umfaßt in Umfangsrichtung eine Vielzahl von in bestimmten Abständen zueinander angeordneten Einzelelementen, welche als im Querschnitt U-förmig gestaltete Vollelemente mit Zahnelementen ausgebildet sind und welche dem Rotor zugeordnet sind;
17.3 die Einzelelemente sind aus pulverrnetallurgisch hergestellten und verpreßten Materialien gefertigt und kraft- und/oder formschlüssig mit dem Statorgehäuse verbunden.

18. Statorbaueinheit nach Anspruch 17, **dadurch gekennzeichnet, daß** die Einzelelemente über eine Klemmverbindung mit dem Statorgehäuse (50) verbunden sind.

19. Statorbaueinheit nach einem der Ansprüche 1 bis 18, **dadurch gekennzeichnet, daß** ein Statorgehäuse (50) vorgesehen ist, an welchem die jeder Farbe zugeordneten Außenstatoreinheiten und Innenstatoreinheiten abgestützt werden.

20. Synchronmaschine (2) mit transversaler Flußführung
mit einem Rotor und einer dem Rotor zugeordneten Statorbaueinheit (1; 1.2; 1.3; 1.4) nach einem der Ansprüche 1 bis 19.

21. Antriebssystem für Fahrzeuge oder stationäre Anlagen mit einer, als Amtriebsmotor fungierende Synchronmaschine nach Anspruch 20.

22. Antriebssystem nach Anspruch 21, **dadurch gekennzeichnet, daß** weitere Antriebsaggregaten zum Antrieb von Nebenverbrauchern oder zur Bereitstellung der zum Betrieb der Synchronmaschine erforderlichen Leistung und mindestens ein Kühlsystem, welches einem Antriebsaggregat zum Antrieb der Nebenverbraucher oder Bereitstellung der zum Betrieb der Synchronmaschine erforderlichen Leistung zugeordnet ist, vorgesehen sind, wobei die Kühlkanäle in der Synchronmaschine in eines der Kühlsysteme eingebunden sind.

## Claims

1. A stator module (1; 1.2; 1.3; 1.4) for a synchronous machine (2; 2.2), comprising transversal flow guidance, especially a transversal flow machine with at least one phase, comprising an outside stator and an inside stator;
1.1 with an inside stator unit (4; 4.1, 4.2, 4.3; 4.4) which is assigned to a phase, carries an armature winding (3) and is associated in the installed position to a rotor (5; 5.2) by forming an air gap (6) arranged in the radial direction relating to the rotational axis of the rotor (5; 5.2) of the synchronous machine (1; 1.2);
1.2 the inside stator unit (4; 4.1, 4.2, 4.3; 4.4) comprises two rows of teeth (5.1 - 5.n, 6.1 - 6.n) which are arranged behind one another in the circumferential direction and which are fastened to an annular yoke element (7; 7.2; 7.3; 7.4) which is made of a metallic composite powder material;
1.3 the outside stator unit assigned to a phase is free from an armature winding, **characterized by** the following feature:
1.4 the yoke element (7; 7.2; 7.3; 7.4) of the inside stator unit comprises at least two yoke parts (15a, 15b; 15.2a, 15.2b; 15.3a, 15.3b, 15.3c; 15.4a, 15.4b) which are arranged adjacent to one another in the axial direction;
1.5 the two yoke parts (15a, 15b; 15.2a, 15.2b; 15.3a, 15.3b, 15.3c; 15.4a, 15.4b) which are arranged adjacent to one another in the axial direction are combined into a modular unit (12; 12.2; 12.3, 12.4) in the region of the contact plane (K_{E}, K_{E1}, K_{E2}) by forming at least one cooling conduit (16; 16.21, 16.22; 16.31, 16.32; 16.41, 16.42, 16.43, 16.44).

2. A stator module (1; 1.2; 1.3; 1.4) according to claim 1, **characterized in that** the cooling conduit (16; 16.21, 16.22; 16.31, 16.32; 16.41, 16.42, 16.43, 16.44) is provided with a liquid-proof and pressure-tight configuration.

3. A stator module (1; 1.2; 1.3; 1.4) according to one of the claims 1 or 2, **characterized in that** the contact plane (K_{E}; K_{E1}; K_{E2}) is arranged in a region as seen in the axial direction between two yoke parts (15a, 15b; 15.2a, 15.2b; 15.3a, 15.3b, 15.3c; 15.4a, 15.4b) which are arranged adjacent to one another in the axial direction, which region can be described by the arrangement of the armature winding (3).

4. A stator module (1; 1.3) according to claim 3, **characterized in that** a plurality of yoke parts (15.3a, 15.3b, 15.3c) are provided which can be combined into a modular unit (12; 12.3) and whose contact planes (K_{E1}; K_{E2}) can be described in the axial direction in a region by the axial extension of armature winding (3.3).

5. A stator module (1; 1.2) according to one of the claims 1 to 4, **characterized by** the following features:
5.1 with a plurality of cooling conduits (16.21, 16.22);
5.2 the cooling conduits (16.21, 16.22) are arranged above one another in the radial direction in the region of the contact plane between two yoke parts arranged adjacent to one another.

6. A stator module (1; 1.2; 1.3; 1.4) according to one of the claims 1 to 5, **characterized by** the following features:
6.1 at least on of the adjacently arranged yoke parts (15a, 15b; 15.2a, 15.2b; 15.3a, 15.3b, 15.3c; 15.4a, 15.4b) comprises at least one recess (19,20) on its face side (17; 17.41, 17.42, 17.43, 17.44; 18; 18.41, 18.42, 18.43, 18.44) aligned towards the respective adjacent yoke part (15a, 15b; 15.2a, 15.2b; 15.3a, 15.3b, 15.3c; 15.4a, 15.4b);
6.2 the face sides (17; 17.41, 17.42, 17.43, 17.44; 18; 18.41, 18.42, 18.43, 18.44) with the recesses (19, 20) contained therein delimit a cooling conduit (16) or form a clearance for guiding a cooling conduit.

7. A stator module (1; 1.2; 1.3) according to one of the claims 4 to 6, **characterized in that** the cooling conduits (16.21, 16.22, 16.31, 16.32) comprise at least one central distribution conduit (21.1) for supplying coolant with at least one feed conduit and/or at least one discharge conduit.

8. A stator module (1; 1.2; 1.3; 1.4) according to one of the claims 1 to 7, **characterized in that** the cooling conduits (16.21, 16.22; 16.31, 16.32; 16.41, 16.42, 16.43, 16.44) or a part of the cooling conduits are associated with a feed conduit (21.2, 21.3, 21.41, 21.42, 21.43, 21.44) and/or a discharge conduit (22.2; 22.3; 22.41, 22.42, 22.43, 22.44) for coolants.

9. A stator module (1; 1.2; 1.3) according to one of the claims 1 to 8, **characterized in that** the individual cooling conduit (16; 16.21, 16.22, 16.31, 16.32) extends in an annular fashion in the circumferential direction or slightly inclined relative to the same.

10. A stator module (1; 1.2) according to one of the claims 1 to 9, **characterized in that** the individual cooling conduit (16; 16.21, 16.22, 16.31, 16.32) extends in the circumferential direction at least over a part of the yoke part (7; 7.2; 7.3).

11. A stator module (1.4) according to one of the claims 1 to 9, **characterized by** the following features:
11.1 each yoke part (15.4a, 15.4b) is subdivided in the circumferential direction into a plurality of segments (15.4a1, 15.4a2, 15.4a3, 15.4a4, 15.4b1, 15.4b2, 15.4b3, 15.b4);
11.2 the segments (15.4a1, 15.4a2, 15.4a3, 15.4a4, 15.4b1, 15.4b2, 15.4b3, 15.b4) of two yoke parts (15.4a, 15.4b) adjacent in the axial direction are arranged in an offset manner relative to each other in the installed position by an amount which is smaller than the extension of the same in the circumferential direction;
11.3 at least a part of the segments (15.4a1, 15.4a2, 15.4a3, 15.4a4, 15.4b1, 15.4b2, 15.4b3, 15.b4) is involved in forming a cooling conduit (16.41, 16.42, 16.43, 16.44).

12. A stator module (1.4) according to claim 11, **characterized in that** the segments (15.4a1, 15.4a2, 15.4a3, 15.4a4, 15.4b1, 15.4b2, 15.4b3, 15.b4) are joined to each other in a positive and/or non-positive manner and/or by material joining.

13. A stator module (1.4) according to one of the claims 11 or 12, **characterized by** the following features:
13.1 each cooling conduit (16.41, 16.42, 16.43, 16.44) is associated with a feed conduit (21.41, 21.42, 21.43, 21.44) and a discharge conduit (22.41, 22.42, 22.43, 22.45).

14. A stator module (1.4) according to claim 13, **characterized in that** the feed conduits (21.41, 21.42, 21.43, 21.44) and the discharge conduits (22.41, 22.42, 22.43, 22.45) are each coupled via a central distribution conduit with a central feed conduit and/or a central discharge conduit.

15. A stator module (1; 1.2; 1.3; 1.4) according to one of the claims 1 to 14, **characterized by** the following features:
15.1 the yoke parts (15a, 15b; 15.2a, 15.2b; 15.3a, 15.3b, 15.3c; 15.4a, 15.4b) or the respective outer yoke parts form in a plurality of yoke parts a stop each for a number of teeth (6.1, 6.n, 5.1, 5.n) on the face sides averted from each other;
15.2 with fastening means for the teeth (5.1, 5.n, 6.1, 6.n) on the yoke element (7; 7.2; 7.3; 7.4);
15.3 with means for axial and radial fixing of the position of the individual yoke parts relative to each other.

16. A stator module (1; 1.2; 1.3; 1.4) according to claim 15, **characterized in that** the fastening means for the teeth (5.1 - 5.n; 6.1 - 6.n) and the means for axial and radial fixing of the position of the individual yoke parts (15a, 15b; 15.2a, 15.2b; 15.3a, 15.3b, 15.3c; 15.4a, 15.4b) are formed by the same components in the form of non-positive and/or positive connecting elements.

17. A stator module (1; 1.2; 1.3; 1.4) according to one of the claims 1 to 16, **characterized by** the following features:
17.1 with a stator housing for supporting the outside and inside stator;
17.2 the outside stator unit assigned to a phase comprises in the circumferential direction a plurality of individual elements which are arranged at certain distances from each other and which are provided with tooth elements as solid elements which are U-shaped in the cross section, and which are associated with the rotor;
17.3 the individual elements are made of materials made and pressed by way of powder metallurgy and are joined to the stator housing in a positive and/or non-positive way.

18. A stator module according to claim 17, **characterized in that** the individual elements are joined to the stator housing (50) by means of a clamped joint.

19. A stator module according to one of the claims 1 to 18, **characterized in that** a stator housing (50) is provided on which outside stator units and inside stator units assigned to each color are supported.

20. A synchronous machine (2) with transversal flow guidance, comprising a rotor and a stator module (1; 1.2; 1.3; 1.4) associated with the rotor in accordance with one of the claims 1 to 19.

21. A drive system for vehicles or stationary systems with a synchronous machine according to claim 20 acting as a drive motor.

22. A drive system according to claim 21, **characterized in that** further drive units are provided for driving secondary consumers or for providing the power required for operation of the synchronous machine and at least one cooling system which is associated to a drive unit for driving the secondary consumers or for providing the power required for operating the synchronous machine, with the cooling conduits being incorporated in the synchronous machine in one of the cooling systems.

## Revendications

1. Ensemble statorique (1; 1.2; 1.3; 1.4) pour machine synchrone (2; 2.2) dans laquelle le flux est transversal, notamment pour une machine à flux transversal avec au moins une phase, du type comportant un stator extérieur et un stator intérieur
1.1 avec un bloc stator intérieur (4 ; 4.1, 4.2, 4.3 ; 4.4) qui est associé à une phase et porte un enroulement d'induit (3) et qui, lorsqu'il est monté, est associé à un rotor (5 ; 5.2) et forme, par rapport à l'axe de rotation du rotor (5 ; 5.2) de la machine synchrone (1 ; 1.2), un entrefer (6) disposé suivant la direction radiale ;
1.2 le bloc stator intérieur (4 ; 4.1, 4.2, 4.3) comprend deux rangées de dents (5.1 - 5.n, 6.1 - 6.n) disposées les unes derrière les autres suivant la direction circonférentielle qui sont fixées à un élément culasse (7 ; 7.2 ; 7.3 ; 7.4) réalisé en un matériau composite de poudre métallique ;
1.3 le bloc stator extérieur associé à une phase est dépourvu d'enroulement d'induit, du type **caractérisé par** la particularité suivante :
1.4 l'élément culasse (7 ; 7.2 ; 7.3; 7.4) du bloc stator intérieur comprend au moins deux parties de culasse (15a, 15b ; 15.2a, 15.2b ; 15.3a, 15.3b, 15.3c ; 15.4a, 15.4b) disposées côte à côte suivant la direction axiale ;
1.5 les deux parties de culasse (15a, 15b ; 15.2a, 15.2b ; 15.3a, 15.3b, 15.3c ; 15.4a, 15.4b) voisines suivant la direction axiale sont regroupées en une unité structurelle (12 ; 12.2 ; 12.3 ; 12.4) à la hauteur du plan de contact (K_{E}, K_{E1}, K_{E2}), formant au moins un canal de refroidissement (16 ; 16.21, 16.22 ; 16.31, 16.32 ; 16.41, 16.42, 16.43, 16.44).

2. Ensemble statorique (1 ; 1.2 ; 1.3 ; 1.4) selon la revendication 1, **caractérisé en ce que** le canal de refroidissement (16 ; 16.21, 16.22 ; 16.31, 16.32 ; 16.41, 16.42, 16.43, 16.44) est réalisé de manière à être étanche aux liquides et à la pression.

3. Ensemble statorique (1 ; 1.2 ; 1.3 ; 1.4) selon l'une quelconque des revendications 1 ou 2, **caractérisé en ce que** le plan de contact (K_{E}, K_{E1}, K_{E2}) entre deux parties de culasse (15a, 15b ; 15.2a, 15.2b ; 15.3a, 15.3b, 15.3c; 15.4a, 15.4b) respectives voisines suivant la direction axiale est disposé, en vue suivant la direction axiale, dans une région qui peut être décrite par l'agencement de l'enroulement d'induit (3).

4. Ensemble statorique (1 ; 1.3) suivant la revendication 3, **caractérisé en ce qu'**une pluralité de parties de culasse (15.3a, 15.3b, 15.3c) aptes à être regroupées en une unité structurelle (12 ; 12.3) est prévue, les plans de contact (K_{E1}; K_{E2}) de ces parties de culasse étant disposés suivant la direction axiale dans une zone apte à être décrite par l'étendue axiale de l'enroulement d'induit (3.3).

5. Ensemble statorique (1 ; 1.2) suivant l'une quelconque des revendications 1 à 4,
**caractérisé par** les particularités suivantes :
5.1 avec une pluralité de canaux de refroidissement (16.21, 16.22) ;
5.2 les canaux de refroidissement (16.21, 16.22) sont disposés l'un par-dessus l'autre suivant la direction radiale à la hauteur du plan de contact entre deux parties de culasse voisines.

6. Ensemble statorique (1 ; 1.2 ; 1.3 ; 1.4) suivant l'une quelconque des revendications 1 à 5,
**caractérisé par** les particularités suivantes :
6.1 au moins une des parties de culasse (15a, 15b ; 15.2a, 15.2b ; 15.3a, 15.3b, 15.3c ; 15.4a, 15.4b) voisines comporte au moins un évidement (19, 20) sur sa face d'extrémité (17 ; 17.41, 17.42, 17.43, 17.44 ; 18 ; 18.41, 18.42, 18.43, 18.44) dirigée vers la partie de culasse (15a, 15b ; 15.2a, 15.2b ; 15.3a, 15.3b, 15.3c ; 15.4a, 15.4b) voisine respective ;
6.2 les faces d'extrémité (17 ; 17.41, 17.42, 17.43, 17.44 ; 18 ; 18.41, 18.42, 18.43, 18.44), avec les évidements (19, 20) qu'elles contiennent, délimitent un canal de refroidissement (16) ou forment un espace libre destiné à l'aménagement d'un canal de refroidissement.

7. Ensemble statorique (1 ; 1.2 ; 1.3) suivant l'une quelconque des revendications 4 à 6,
**caractérisé en ce qu'**au moins un canal de distribution central (21.1) pour l'alimentation en fluide de refroidissement avec au moins un canal d'alimentation et/ou au moins un canal d'évacuation est associé aux canaux de refroidissement (16.21, 16.22, 16.31, 16.32).

8. Ensemble statorique (1 ; 1.2 ; 1.3 ; 1.4) suivant l'une quelconque des revendications 1 à 7, **caractérisé en ce qu'**un canal d'alimentation (21.2, 21.3, 21.41, 21.42, 21.43, 21.44) et/ou un canal d'évacuation (22.2 ; 22.3, 22.41, 22.42, 22.43, 22.44) pour un fluide de refroidissement est respectivement associé aux canaux de refroidissement (16.21, 16.22 ; 16.31, 16.32 ; 16.41, 16.42, 16.43, 16.44) ou à une partie des canaux de refroidissement.

9. Ensemble statorique (1 ; 1.2 ; 1.3) suivant l'une quelconque des revendications 1 à 8,
**caractérisé en ce que** les différents canaux de refroidissement (16 ; 16.21, 16.22, 16.31, 16.32) s'étendent en forme d'anneau suivant la direction circonférentielle ou en légère inclinaison par rapport à celle-ci.

10. Ensemble statorique (1 ; 1.2) suivant l'une quelconque des revendications 1 à 9,
**caractérisé en ce que** les différents canaux de refroidissement (16 ; 16.21, 16.22 ; 16.31, 16.32) s'étendent sur au moins une partie de la partie de culasse (7 ; 7.2 ; 7.3) suivant la direction circonférentielle.

11. Ensemble statorique (1.4) suivant l'une quelconque des revendications 1 à 9,
**caractérisé par** les particularités suivantes :
11.1 chaque partie de culasse (15.4a, 15.4b) est divisée suivant la direction circonférentielle en une pluralité de segments (15.4a1, 15.4a2, 15.4a3, 15.4a4, 15.4b1, 15.4b2, 15.4b3, 15.4b4) ;
11.2 en position montée, les segments (15.4a1, 15.4a2, 15.4a3, 15.4a4, 15.4b1, 15.4b2, 15.4b3, 15.4b4) de deux parties de culasse (15.4a, 15.4b) voisines suivant la direction axiale sont décalés les uns par rapport aux autres d'une distance inférieure à leur étendue suivant la direction circonférentielle ;
11.3 au moins une partie des segments (15.4a1, 15.4a2, 15.4a3, 15.4a4, 15.4b1, 15.4b2, 15.4b3, 15.4b4) participe à la formation d'un canal de refroidissement (16.41, 16.42, 16.43, 16.44).

12. Ensemble statorique (1.4) suivant la revendication 11, **caractérisé en ce que** les segments (15.4a1, 15.4a2, 15.4a3, 15.4a4, 15.4b1, 15.4b2, 15.4b3, 15.4b4) sont reliés par une liaison par coopération de formes et/ou par une liaison par adhérence et/ou sont venus de matière les uns avec les autres.

13. Ensemble statorique (1.4) suivant l'une quelconque des revendications 11 ou 12,
**caractérisé par** la particularité suivante :
13.1 à chaque canal de refroidissement (16.41, 16.42, 16.43, 16.44) est associé un canal d'alimentation (21.41, 21.42, 21.43, 21.44) et un canal d'évacuation (22.41, 22.42, 22.43, 22.45).

14. Ensemble statorique (1.4) suivant la revendication 13, **caractérisé en ce que** les canaux d'alimentation (21.41, 21.42, 21.43, 21.44) et les canaux d'évacuation (22.41, 22.42, 22.43, 22.45) sont respectivement couplés par l'intermédiaire d'un canal de distribution central possédant un conduit d'alimentation central et/ou un conduit d'évacuation central.

15. Ensemble statorique (1 ; 1.2 ; 1.3 ; 1.4) selon l'une quelconque des revendications 1 à 14,
**caractérisé par** les particularités suivantes :
15.1 les parties de culasse (15a, 15b ; 15.2a, 15.2b ; 15.3a, 15.3b, 15.3c ; 15.4a, 15.4b) ou les parties de culasse respectivement extérieures forment dans une pluralité de parties de culasse, sur les faces d'extrémité détournées l'une de l'autre, une butée pour une série de dents (6.1, 6.n, 5.1, 5.n) ;
15.2 avec des moyens de fixation pour les dents (5.1-5.n, 6.1-6.n) sur l'élément culasse (7 ; 7.2 ; 7.3 ; 7.4) ;
15.3 avec des moyens de blocage en position axiale et radiale des différentes parties de culasse les unes par rapport aux autres.

16. Ensemble statorique (1 ; 1.2 ; 1.3 ; 1.4) selon la revendication 15,
**caractérisé en ce que** les moyens de fixation pour les dents (5.1-5.n ; 6.1-6.n) et les moyens de blocage en position axiale et radiale des différentes parties de culasse (15a, 15b ; 15.2a, 15.2b ; 15.3a, 15.3b, 15.3c ; 15.4a, 15.4b) sont formés par les mêmes éléments structurels en forme d'éléments de liaison par adhérence et/ou par coopération de forme.

17. Ensemble statorique (1 ; 1.2 ; 1.3 ; 1.4) suivant l'une quelconque des revendications 1 à 16,
**caractérisé par** les particularités suivantes :
17.1 avec une carcasse statorique destinée à soutenir le stator extérieur et intérieur ;
17.2 le bloc stator extérieur associé à une phase comprend, suivant la direction circonférentielle, une pluralité d'éléments individuels qui sont disposés avec des écartements déterminés entre eux et qui sont formés sous forme d'éléments pleins de section en U comportant des éléments formant des dents et qui sont associés au rotor ;
17.3 les éléments individuels sont fabriqués en matériaux réalisés suivant une technique de métallurgie des poudres et compactés et sont reliés à la carcasse statorique par une liaison par adhérence et/ou par coopération de formes.

18. Ensemble statorique selon la revendication 17, **caractérisé en ce que** les éléments individuels sont reliés à la carcasse statorique (50) par l'intermédiaire d'une liaison par serrage.

19. Ensemble statorique selon l'une quelconque des revendications 1 à 18, **caractérisé en ce qu'**est prévue une carcasse statorique (50) contre laquelle viennent s'appuyer les blocs de stator extérieur et les blocs de stator intérieur associés à chaque couleur.

20. Machine synchrone (2) à flux transversal
avec un rotor et un ensemble statorique (1 ; 1.2 ; 1.3 ; 1.4) selon l'une quelconque des revendications 1 à 19 associé au rotor.

21. Système d'entraînement pour véhicules ou installations fixes avec une machine synchrone selon la revendication 20 faisant office de moteur d'entraînement.

22. Système d'entraînement selon la revendication 21, **caractérisé en ce que** sont prévus d'autres groupes d'entraînement destinés à l'entraînement d'accessoires consommateurs d'énergie ou à fournir la puissance nécessaire au fonctionnement de la machine synchrone et au moins un système de refroidissement qui est associé à un groupe d'entraînement destiné à l'entraînement des accessoires consommateurs d'énergie ou à fournir la puissance nécessaire au fonctionnement de la machine synchrone, les canaux de refroidissement dans la machine synchrone étant intégrés dans l'un des systèmes de refroidissement.
